# EUROPÄISCHE PATENTSCHRIFT

(11) **EP 4 557 078 B1**
(45) Veröffentlichungstag und Bekanntmachung des Hinweises auf die Patenterteilung: **17.06.2026**
(21) Anmeldenummer: 24157503.4
(22) Anmeldetag: 14.02.2024
(51) Int. Cl.: G06F 8/34, G06F 8/35, G06F 8/41

(54) **VERFAHREN ZUR ERZEUGUNG VON QUELLCODE**
METHOD FOR GENERATING SOURCE CODE
PROCÉDÉ DE GÉNÉRATION DE CODE SOURCE

(30) Priorität: 17.11.2023 DE 102023132111
(43) Veröffentlichungstag der Anmeldung: 21.05.2025
(73) Patentinhaber: dSPACE SE & Co. KG, 33102 Paderborn (DE)
(72) Erfinder: Mair, Michael, 33102 Paderborn (DE); Gayk, Florian, 33102 Paderborn (DE)

(56) Entgegenhaltungen:
- EP-A2- 0 513 433

## Beschreibung

Die Erfindung betrifft die Erzeugung von ausführbarem Code aus einem Blockdiagramm, insbesondere für die Programmierung von Steuergeräten.

Steuergeräte werden in einer Vielzahl von Anwendungen eingesetzt, um physikalische Größen eines Prozesses zu erfassen und/oder mittels angeschlossener Aktuatoren auf einen Prozess einzuwirken; beispielsweise kann es sich um eine Antiblockierregelung eines Bremsvorgangs handeln. Die das dynamische Verhalten des Prozesses bestimmenden Zeitkonstanten bedingen häufig Zykluszeiten von 1 ms oder kürzer, so dass eine Echtzeitfähigkeit des Steuergeräts erforderlich ist. Aus Kostengründen weisen Steuergeräte häufig Mikrocontroller mit geringem Speicher und beschränkter Rechenleistung auf, weshalb der Größe und Effizienz des ausführbaren Codes eine große Bedeutung zukommt.

Um den Entwurf von Steuergeräten zu beschleunigen, werden Kontrollstrategien häufig anhand von Modellen in einer Rechenumgebung wie MATLAB/Simulink entwickelt. Somit können Prozess und/oder Regler bzw. allgemein das Verhalten des Steuergeräts zunächst simuliert und das Vorliegen von gewünschten Eigenschaften überprüft werden. Bei den Modellen kann es sich insbesondere um Blockdiagramme handeln, welche Blöcke umfassen, die Operationen wie Berechnungen ausführen, wobei ein Block beispielsweise aus mehreren Eingangssignalen ein Ausgangssignal berechnen kann. In der Regel werden Blockdiagramme zyklisch ausgeführt, wobei alle Blöcke dauerhaft im Speicher gehalten werden und jeder Block einmal pro Zeitschritt ausgeführt wird. Insbesondere kann ein Block in jedem Zeitschritt auf Eingangssignale aus dem Vorgängerblock eine oder mehrere Operationen anwenden, um Ausgangssignale des aktuellen Schritts zu erzeugen. Blockdiagramme können zusätzlich auch ein Teilmodell zur Beschreibung eines diskreten Verhaltens umfassen, in dem eine Anzahl von Zuständen und Übergangsbedingungen definiert sind.

Aus den Modellen kann mittels eines Codegenerators direkt Quellcode für die Programmierung des Steuergeräts erzeugt werden. Beispielsweise ist aus dem Dokument "Production Quality Code Generation from Simulink Block Diagrams", Proceedings of the 1999 International Symposium on Computer Aided Control System Design, Kohala Coast, Hawai'i, von H. Hanselmann et al. ein Codegenerator für die Erzeugung von Quellcode in Produktionsqualität bekannt.

Wenn Modelle in Form eines Blockdiagramms beschrieben werden, wobei Blöcke zum Austausch von Daten bzw. dem Weiterleiten von Signalen über gerichtete Verbindungen bzw. Signalverbindungen verknüpft sind, besteht ein übliches Vorgehen der Codeerzeugung darin, für jeden Ausgang eines Blocks eine Variable im Quellcode zu erzeugen. Allerdings hat dies den Nachteil, dass in der Regel dabei zunächst mehr Blockvariablen entstehen, als wirklich erforderlich sind. Durch eine anschließende Optimierung kann die Anzahl von Blockvariablen bzw. allgemein die Codegröße verringert werden. So ist es aus der EP 2418577 A1 bekannt, ein Blockdiagramm in eine Zwischendarstellung zu transformieren und auf diese Zwischendarstellung mindestens eine Optimierung anzuwenden, um eine optimierte Zwischendarstellung zu erzeugen. Eine Vielzahl an Optimierungen, die an sich aus dem Compilerbau bekannt sind, kann nacheinander angewandt werden, um weiter optimierte Zwischendarstellungen zu erzeugen. Anschließend wird aus der optimierten Zwischendarstellung insbesondere C-Code erzeugt.

Aus der EP 0513433 A2 ist ein Verfahren zur Generierung von effizient ausführbarem Code aus einem Blockdiagramm bekannt, bei dem jeder Block des Blockdiagramms einer Softwarefunktion entspricht, wobei die Blöcke Eingänge und Ausgänge haben und über Verbindungen zwischen diesen zum Blockdiagramm zusammengefügt sind. Zunächst wird eine Durchführungsliste für jeden Ausgang eines Blocks erzeugt, die angibt, welche Eingänge sich auf diesen Ausgang auswirken. Dann wird aus einer Auswertung der Durchführungslisten ermittelt, ob ein Block ausgeführt werden kann, wobei für ausführbare Blöcke ein Strafmaß berechnet wird, welches datenflussbedingte Ineffizienzen berücksichtigt. Beim Zusammenfügen des Codes werden die Softwarefunktionen von Blöcken mit geringerem Strafmaß vor denen von Blöcken mit einem höheren Strafmaß angeordnet, so dass diese zuerst ausgeführt werden.

Aufgrund nicht erfüllter Vorbedingungen können übliche Optimierungen häufig nicht angewandt werden, so dass eingeschränkt optimierter Code auftreten kann. Beispielsweise kann es im Fall von parallelen Kontrollflusszweigen zum Zeitpunkt der Codegenerierung unklar sein, welcher Zweig ausgeführt wird, weil die Bedingungen erst zur Laufzeit sinnvoll ausgewertet werden können. Dies erfordert die Erstellung einer Zwischenspeichervariable, welche Ziel von Umkopieraktionen bzw. Berechnungen der parallelen Kontrollflusszweige ist. Besonders wenn die Zwischenspeichervariable eine mehrkomponentige Variable ist, also beispielsweise ein Vektor, tritt ein erhöhter Stack-Verbrauch und eine durch das Umkopieren erhöhte Laufzeit auf.

Vor diesem Hintergrund ist es eine Aufgabe der vorliegenden Erfindung, den Stand der Technik weiterzuentwickeln und insbesondere eine Erzeugung von Quellcode mit verringertem Stack-Verbrauch zu ermöglichen.

Diese Aufgabe wird durch ein Verfahren zum Erzeugen von Quellcode nach Anspruch 1, ein Computerprogrammprodukt nach Anspruch 11 und ein Computersystem nach Anspruch 12 gelöst. Vorteilhafte Weiterbildungen sind Gegenstand der abhängigen Unteransprüche.

Es wird also ein Verfahren zum Erzeugen von Quellcode aus einem oder mehreren Blöcken eines Blockdiagramms bereitgestellt, welches mindestens zwei Blöcke und mindestens eine Signalverbindung zwischen den Blöcken umfasst. Das Erzeugen von Quellcode umfasst ein Transformieren des Blockdiagramms in eine Zwischendarstellung, ein sukzessives Optimieren der Zwischendarstellung und ein Übersetzen der optimierten Zwischendarstellung in Quellcode, wobei das Transformieren eines Blocks das Erstellen eines Bezugs auf eine Blockausgangsvariable umfasst. Erfindungsgemäß erfolgt ein Erkennen von mindestens zwei parallelen Kontrollflusszweigen, die eine Variable lesen oder schreiben, ein Identifizieren einer Operation, die auf die Variable zugreift, ein Überprüfen, ob ein Kostenkriterium erfüllt ist, und ein Vervielfältigen der Operation in den mindestens zwei parallelen Kontrollflusszweigen, wenn das Kostenkriterium erfüllt ist, wobei das Vervielfältigen der Operation ein Verschieben der Operation von der ursprünglichen Stelle an die Stellen umfasst, wo die Variable gelesen oder geschrieben wird bzw. lesend oder schreibend auf die Variable zugegriffen wird. Weil das Vervielfältigen der Operation ein Verschieben der Operation umfasst, bleibt die Operation somit an der ursprünglichen Stelle nicht bestehen.

Über eine Signalverbindung können Daten bzw. Signale übertragen werden; hierbei gibt ein erster Block einen Wert oder je nach Definition mehrere zusammengehörige Werte aus und ein zweiter Block empfängt diese und berücksichtigt sie bei der Ermittlung von einem oder mehreren zusammengehörigen Ausgabewerten des zweiten Blocks. Signale können skalare Variablen und/oder strukturierte Datentypen wie Arrays enthalten; beispielsweise wird aus einem Bus-Signal im generierten Code eine Struktur-Variable. Wenn ein Block den Zugriff auf eine mehrkomponentige Variable umfasst, kann die Einsparung dieser Variablen eine beträchtliche Einsparung an Speicherplatz und an Ausführungszeit ermöglichen, beispielsweise indem Instruktionen für das Umkopieren der einzelnen Komponenten bzw. Elemente der Variablen nicht im Code generiert werden und dementsprechend auch nicht zur Laufzeit ausgeführt werden müssen. Die mehrkomponentige Variable kann ein Vektor, der eine Vielzahl von Variablen desselben Datentyps umfasst, eine Matrix, die eine Vielzahl von Vektoren umfasst, eine Struktur, die eine Vielzahl von Variablen beliebigen Datentyps umfasst, oder ein Vektor oder eine Matrix von Strukturen sein.

Die Erfindung basiert auf der Überlegung, während der Codegenerierung gemäß eines Kostenmaßes bzw. einfacher Kriterien über eine Vervielfachung einer Operation in die betroffenen Kontrollflusszweige zu entschieden. Dies ermöglicht die Eliminierung einer Zwischenspeichervariable oder zumindest die Ersetzung durch eine lokale Variable. Variablen werden zu Beginn ihres Scopes auf den Stack abgelegt und verbrauchen einen ihrer Größe entsprechenden Speicherbereich, wobei sich beispielsweise die Größe für einen Vektor aus der Dimension und dem Speicherbedarf eines einzelnen Elements ergibt. Nach Ende des Scopes bzw. der Lebensdauer der Variablen wird der entsprechende Speicherbereich wieder freigegeben. Dies führt dazu, dass eine lokale Variable wegen der kürzeren Lebensdauer in einem verringerten maximalen Stack-Verbrauch der umgebenden Programmeinheit resultiert. Wenn die Verschiebung weitere Optimierungen ermöglicht, die insbesondere zum Wegfall von Zwischenspeichervariablen führen können, kann sowohl der maximale als auch der typische Stack-Verbrauch der umgebenden Programmeinheit sinken.

Vorteilhafterweise identifiziert das erfindungsgemäße Verfahren Zwischenspeichervariablen, für die eine Rückwärtspropagation und/oder eine Vorwärtspropagation vorgenommen werden kann, wobei bei einer Rückwärtspropagation die Variable eine Eingangsvariable der Operation ist und das Vervielfältigen der Operation ein Einfügen im Quellcode vor der ursprünglichen Operation umfasst bzw. das Vervielfältigen der Operation ein Verschieben im Quellcode vor die ursprüngliche Stelle umfasst, und wobei bei einer Vorwärtspropagation die Variable eine Ausgangsvariable der Operation ist und das Vervielfältigen der Operation ein Einfügen im Quellcode nach der ursprünglichen Operation umfasst bzw. das Vervielfältigen der Operation ein Verschieben im Quellcode hinter die ursprüngliche Stelle umfasst. Anhand der relativen Lage der ursprünglichen Operation und der benachbarten lesenden oder schreibenden Zugriffe auf die Variable, auf welche in der Operation zugegriffen wird, ist ersichtlich, ob eine Rückwärtspropagation oder eine Vorwärtspropagation in Frage kommt.

Vorzugsweise ist das Kostenkriterium ohne weitere Prüfung erfüllt, wenn die Operation ein Funktionsaufruf mit weniger Parametern als ein vorgegebener Schwellenwert ist und entweder eine Vorwärtspropagation erfolgt, bei der mindestens ein Kontrollflusszweig unabhängig von der Variablen ist, oder die Variable eine mehrkomponentige Variable ist. Der vorgegebene Schwellenwert kann beispielsweise fünf sein, und es kann zusätzlich gefordert werden, dass die Parameter nur Variablen, Konstanten oder Adressen bzw. Zeiger sind. Der Funktionsaufruf kann optional die Zuweisung eines Rückgabewerts umfassen. Diese Ausführungsform basiert auf der Überlegung, dass in manchen Konstellationen keine detaillierte Prüfung erfolgen muss, weil in allen praktisch auftretenden Fällen eine Einsparung zu erwarten ist. Das Kostenkriterium ist somit ohne weitere Prüfung erfüllt bzw. gilt als erfüllt, wenn die Operation ein Funktionsaufruf mit weniger Parametern als ein vorgegebener Schwellenwert ist und zusätzlich eine der folgenden Bedingungen erfüllt ist:
- im Fall einer Vorwärtspropagation ist mindestens ein Kontrollflusszweig unabhängig von der Variablen und/oder die Variable ist eine mehrkomponentige Variable
- im Fall einer Rückwärtspropagation ist die Variable eine mehrkomponentige Variable.

Bevorzugt berücksichtigt das Kostenkriterium die Zunahme der Codegröße und eine Verringerung des Stack-Verbrauchs und/oder eine mögliche Verringerung der Laufzeit. Da eine Vervielfachung der Operation in der Regel eine Zunahme der Codegröße verursacht, sollte diese nur dann erfolgen, wenn die Verringerung von Stack-Verbrauch und/oder Laufzeit hinreichend groß ist. Es kann vorgesehen sein, dass eine vorgegebene Gewichtung der Maße für Stack-Verbrauch und/oder Laufzeit angewandt wird; die Gewichtung kann auch vom Nutzer vorgegeben werden.

Besonders bevorzugt wird die Zunahme der Codegröße basierend auf der Anzahl von parallelen Kontrollflusszweigen, welche auf die Variable zugreifen, und/oder eines Maßes für die Komplexität der Operation ermittelt.

Besonders bevorzugt wird die Verringerung des Stack-Verbrauchs und/oder eine mögliche Verringerung der Laufzeit basierend auf der Anzahl von parallelen Kontrollflusszweigen, welche nicht auf die Variable zugreifen, und des Speicherbedarfs und/oder einer Dimension der Variable ermittelt wird. Wenn die Variable eine mehrkomponentige Variable ist, also beispielsweise eine Struktur mit einer Vielzahl von Komponenten oder ein Vektor mit einer Vielzahl von Elementen, kann eine verringerte Lebensdauer oder eine vollständige Eliminierung der Variablen bedeutende Einsparungen am Stack-Verbrauch ermöglichen. Da das Umkopieren eines Vektors in der Regel über eine Schleife erfolgt, können auch deutliche Einsparungen in der Laufzeit realisiert werden, wenn die Variable wegfällt oder zumindest eine Variable mit geringerer Dimension verwendet werden kann.

In Ausführungsformen der Erfindung umfasst die Operation einen Funktionsaufruf und/oder eine Berechnung über Elemente einer mehrkomponentigen Variablen. Wenn die Variable eine Zwischenspeichervariable zur Kommunikation zwischen verschiedenen Blöcken darstellt, die im Falle einer erfindungsgemäßen Optimierung eliminiert werden bzw. wegfallen kann, können vorzugsweise ein oder mehrere der folgenden heuristischen Kostenkriterien überprüft werden:
a. Wenn die Operation ein Funktionsaufruf oder eine Schleife mit einer einfachen Berechnung über die einzelnen Elemente der mehrkomponentigen Variablen ist, kann eine Rückwärtspropagation oder eine Vorwärtspropagation vorgenommen werden, wenn auf die Variable nur noch innerhalb der parallelen Kontrollflusszweige zugegriffen wird und in mindestens einer vorgegebenen Anzahl von Kontrollflusszweigen, insbesondere mindestens einem Kontrollflusszweig, ein reines Umkopieren der Variable erfolgt.
b. Wenn die Operation ein Funktionsaufruf oder eine Schleife mit einer einfachen Berechnung über die einzelnen Elemente der mehrkomponentigen Variablen ist, kann eine Vorwärtspropagation vorgenommen werden, wenn auf die Variable in mindestens einer vorgegebenen Anzahl von Kontrollflusszweigen, insbesondere mindestens einem Kontrollflusszweig, überhaupt nicht zugegriffen wird.
c. Wenn die Operation eine Schleife mit einer einfachen Berechnung über die einzelnen Elemente der mehrkomponentigen Variablen ist, kann eine Rückwärtspropagation oder eine Vorwärtspropagation vorgenommen werden, wenn auf die Variable nur noch in den parallelen Kontrollflusszweigen zugegriffen wird, und die Dimension der Variable um mindestens eine vorgegebene Anzahl von Bits bzw. Bytes verringert werden kann.
d. Wenn die Operation eine Schleife mit einer einfachen Berechnung über die einzelnen Elemente der mehrkomponentigen Variablen ist, kann eine Rückwärtspropagation oder eine Vorwärtspropagation vorgenommen werden, wenn auf die Variable nur noch in den parallelen Kontrollflusszweigen zugegriffen wird, und es in mindestens einer vorgegebenen Anzahl von Kontrollflusszweigen, insbesondere mindestens einem Kontrollflusszweig, eine weitere Schleife gibt, die mit der vervielfältigten Schleife zusammengefasst werden kann.

Mit einer einfachen Berechnung ist insbesondere eine Berechnung gemeint, die in einer Zeile C-Code (ohne weitere Funktionsaufrufe) formuliert werden kann. Die einfache Berechnung kann ein Speichern in einer skalaren Akkumulator-variable umfassen. Bei Operationen, welche mehrere Variablen umfassen, kann die erfindungsgemäße Optimierung für diejenige Variable umgesetzt werden, welche ein Kostenkriterium erfüllt; hierbei kann auch vorgesehen sein, dass unter mehreren geeigneten Variablen diejenige Variable ausgewählt wird, für welchen das Kostenkriterium am deutlichsten erfüllt ist bzw. die größtmögliche Abnahme von Stack-Verbrauch und Ausführungszeit zu erwarten ist.

Es ist zweckmäßig, wenn das Verfahren zum Erzeugen von Quellcode zusätzlich ein nachfolgendes Anwenden mindestens einer weiteren Optimierung auf die Zwischendarstellung umfasst. Dadurch, dass die Operation in den verschiedenen Kontrollflusszweigen angeordnet ist, können bisher nicht mögliche Optimierungen angewandt werden, wie insbesondere ein Zusammenfassen mit einer weiteren in diesem Kontrollflusszweig angeordneten Schleife. Dies kann auch dazu führen, dass insgesamt die Codegröße abnimmt.

Besonders zweckmäßig ist es, wenn das Kostenkriterium eine Abschätzung der von der mindestens einen weiteren Optimierung verursachten Änderungen an Laufzeit, Stack-Verbrauch und/oder Codegröße umfasst. Auch wenn eine genaue Ermittlung aufwändig wäre, kann doch in vielen Fällen eine näherungsweise Angabe einfach und schnell ermittelt werden.

Wenn Blockdiagramme hierarchisch definiert werden, wobei ein Block in einer höheren Ebene mehrere Blöcke einer untergeordneten Ebene umfassen kann, und wobei Blöcke einer untergeordneten Ebene einem Block einer höheren Ebene zugeordnet sind kann eine gemeinsame Betrachtung mehrerer Hierarchieebenen vorgesehen sein.

Die Erfindung betrifft ferner ein Verfahren zum Konfigurieren eines Steuergeräts, wobei das Steuergerät mindestens eine Recheneinheit umfasst und vorzugsweise mindestens einen Sensor und/oder mindestens einen Aktor aufweist, um Daten eines physikalischen Prozesses zu erfassen und/oder auf diesen einzuwirken, das Verfahren umfassend die Schritte
a. Einlesen eines Blockdiagramms,
b. Erzeugen eines Quellcodes mit einem erfindungsgemäßen Verfahren,
c. Kompilieren des Quellcodes für die Recheneinheit, so dass ein ausführbarer Code erzeugt wird,
d. Übertragen des ausführbaren Codes auf das Steuergerät, und
e. Hinterlegen des ausführbaren Codes auf einem nichtflüchtigen Speicher des Steuergeräts und/oder Ausführen des ausführbaren Codes durch die Recheneinheit des Steuergeräts.

Ferner betrifft die Erfindung ein Computerprogrammprodukt mit einem computerlesbaren Speichermedium, auf dem Befehle eingebettet sind, die, wenn sie von einem Prozessor ausgeführt werden, bewirken, dass der Prozessor dazu eingerichtet ist, ein erfindungsgemäßes Verfahren auszuführen.

Weiterhin betrifft die Erfindung ein Computersystem umfassend eine Mensch-Maschine-Schnittstelle, einen nichtflüchtigen Speicher und einen Prozessor, wobei der Prozessor dazu eingerichtet ist, ein erfindungsgemäßes Verfahren auszuführen.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

Darin zeigt:
- Figur 1: eine bevorzugte Ausführungsform eines Computersystems,
- Figur 2: eine schematische Darstellung der vorzugsweise auf einem Computersystem vorhandenen Softwarekomponenten,
- Figur 3: einen schematischen Ablaufplan einer Ausführungsform des erfindungsgemäßen Verfahrens zum Erzeugen von Quellcode, und
- Figur 4: ein Blockdiagramm mit parallelen Kontrollflusszweigen.

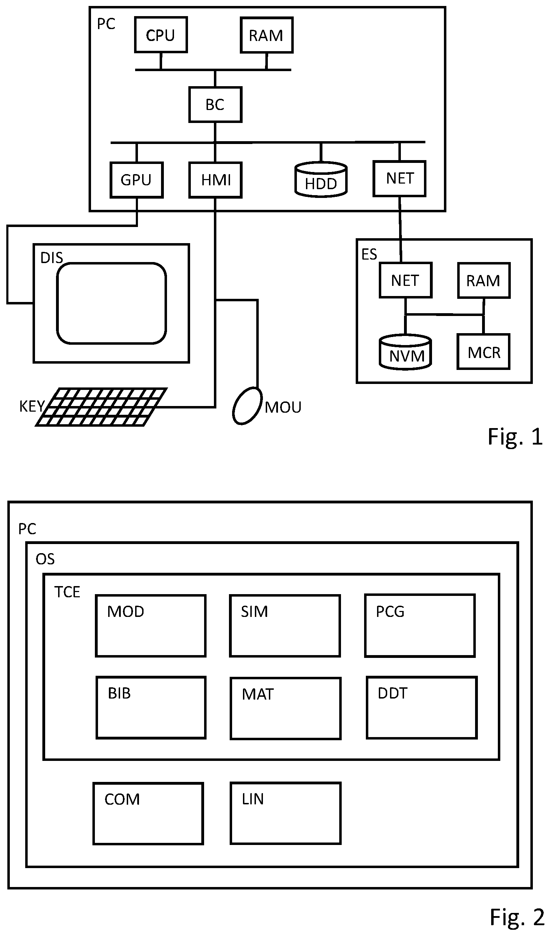

Figur 1 zeigt eine beispielhafte Ausführung eines Computersystems PC.

Dieses weist einen Prozessor CPU, der insbesondere als Mehrkernprozessor realisiert sein kann, einen Arbeitsspeicher RAM und einen Buscontroller BC auf. Bevorzugt ist das Computersystem PC dazu ausgelegt, von einem Nutzer direkt manuell bedient zu werden, wobei über eine Grafikkarte GPU ein Monitor DIS und über eine Peripherieschnittstelle HMI eine Tastatur KEY und eine Maus MOU angeschlossen sind. Prinzipiell könnte die Mensch-Maschine-Schnittstelle des Computersystems PC auch als Touch-Interface ausgebildet sein. Das Computersystem umfasst weiterhin einen nichtflüchtigen Datenspeicher HDD, der insbesondere als Festplatte und/oder Solid State Disk ausgeführt sein kann, sowie eine Schnittstelle NET, insbesondere eine Netzwerkschnittstelle. Über die Schnittstelle NET kann ein Steuergerät ES angeschlossen sein. Prinzipiell können ein oder mehrere beliebige Schnittstellen, insbesondere drahtgebundene Schnittstellen, an dem Computersystem PC vorhanden und jeweils für die Verbindung mit einem Steuergerät ES einsetzbar sein. Zweckmäßigerweise kann eine Netzwerkschnittstelle nach dem Ethernet-Standard verwendet werden; die Schnittstelle NET kann auch drahtlos ausgeführt sein, wie insbesondere als WLAN-Schnittstelle oder nach einem Standard wie Bluetooth.

Das Steuergerät ES kann als ein Seriensteuergerät oder als Evaluierungsboard für eine Target-Plattform ausgeführt sein. Zweckmäßigerweise umfasst es eine Schnittstelle NET zur Verbindung mit dem Computersystem PC, einen Mikrocontroller MCR mit einer von dem Prozessor des Computersystems abweichenden Architektur, einen Arbeitsspeicher RAM und einen nichtflüchtigen Speicher NVM. Bei Vorhandensein des Steuergeräts ES kann vorzugsweise eine Processor-in-the-Loop Simulation des generierten Codes erfolgen.

In Figur 2 ist ein Schema der vorzugsweise auf dem Computersystem PC installierten Softwarekomponenten dargestellt. Diese verwenden Mechanismen des Betriebssystems OS, um beispielsweise auf den nichtflüchtigen Speicher HDD zuzugreifen oder über die Netzwerkschnittstelle NET eine Verbindung zu einem externen Rechner aufzubauen.

Eine Technische Rechenumgebung TCE ermöglicht die Erstellung von Modellen und die Erzeugung von Quellcode aus den Modellen. In einer Modellierumgebung MOD können vorzugsweise über eine graphische Benutzerschnittstelle Modelle eines dynamischen Systems erstellt werden. Hierbei kann es sich insbesondere um Blockdiagramme handeln, welche mehrere Blöcke umfassen und das zeitliche Verhalten und/oder interne Zustände eines dynamischen Systems beschreiben. Zumindest einige der Blöcke sind über Signale verbunden, also gerichtete Verbindungen zum Austausch von Daten, welche skalar oder zusammengesetzt sein können. Blöcke können atomar sein, also aus Sicht der umgebenden Blöcke eine Einheit bilden, bei der zu Beginn eines Rechenschritts alle Eingangssignale anliegen müssen und zu Ende eines Rechenschritts alle Ausgangssignale vorhanden sind.

Wenn Blockdiagramme hierarchisch sind, kann eine Vielzahl von Blöcken in einer untergeordneten Ebene den Aufbau eines Blocks in einer übergeordneten Ebene beschreiben. Hierarchische bzw. zusammengesetzte Blöcke, auch wenn diese atomar sind, können eine Vielzahl von Blöcken in einer untergeordneten Ebene umfassen. Zusammengesetzte Blöcke können insbesondere Subsysteme sein; Subsysteme können zusätzliche Eigenschaften aufweisen, wie die Implementierung in einer getrennten Funktion und/oder ein Triggern der Ausführung des Subsystems über ein dediziertes Signal. In Subsystemen können spezielle Blöcke angeordnet sein, um die Eigenschaften des Subsystems weiter zu spezifizieren. Die Rechenumgebung TCE umfasst eine oder mehrere Bibliotheken BIB, aus der Blöcke bzw. Bausteine für den Aufbau eines Modells ausgewählt werden können. In einer Skriptumgebung MAT können Anweisungen interaktiv oder über eine Batchdatei eingegeben werden, um Berechnungen durchzuführen oder das Modell zu modifizieren. Die Rechenumgebung TCE umfasst weiterhin eine Simulationsumgebung SIM, die dazu eingerichtet ist, das Blockdiagramm zu interpretieren bzw. auszuführen, um das zeitliche Verhalten des Systems zu untersuchen. Diese Berechnungen erfolgen vorzugsweise mit Fließkommazahlen hoher Genauigkeit auf einem oder mehreren Kernen des Mikroprozessors CPU des Computersystems.

Aus einem erstellten Modell kann mit Hilfe eines Codegenerators PCG ein Quellcode bevorzugt in einer Programmiersprache wie C erzeugt werden. In einer Definitionsdatensammlung DDT werden zweckmäßigerweise zusätzliche Informationen zu dem Modell, insbesondere zu den Blockvariablen hinterlegt. Zweckmäßigerweise werden den Blockvariablen Wertebereiche und/oder Skalierungen zugeordnet, um eine Berechnung des Modells mit Festkomma-Instruktionen zu unterstützen. Auch gewünschte Eigenschaften des Quellcodes, beispielsweise Konformität zu einem Standard wie MISRA, können in der Definitionsdatensammlung DDT eingestellt bzw. hinterlegt werden. Zweckmäßigerweise wird jede Blockvariable einem vorgegebenen Variablentyp zugeordnet und es werden eine oder mehrere gewünschte Eigenschaften, wie beispielsweise die Zulässigkeit von Optimierungen wie einem Zusammenfassen von Variablen eingestellt. Der Codegenerator PCG wertet vorzugsweise die Einstellungen der Definitionsdatensammlung DDT aus und berücksichtigt diese bei der Erzeugung des Quellcodes. Die Definitionsdatensammlung DDT kann eine Baumstruktur aufweisen bzw. als eine einfache Datei in einem Speicher des Computersystems hinterlegt sein; alternativ kann es vorgesehen sein, die Definitionsdaten in einem dedizierten Datenbanksystem zu hinterlegen. Die Definitionsdatensammlung kann eine Programmschnittstelle und/oder Import-/Export-Funktionen aufweisen.

Das Computersystem PC weist einen Compiler COM und einen Linker LIN auf, die zweckmäßigerweise für die Erzeugung von auf einem Steuergerät ES und/oder dem Computersystem PC ausführbaren Binärdateien eingerichtet sind. Prinzipiell kann eine Vielzahl von Compilern vorhanden sein, insbesondere Cross-Compiler für unterschiedliche Zielplattformen, um Steuergeräte bzw. Evaluationsboards ES mit unterschiedlichen Prozessorarchitekturen zu unterstützen.

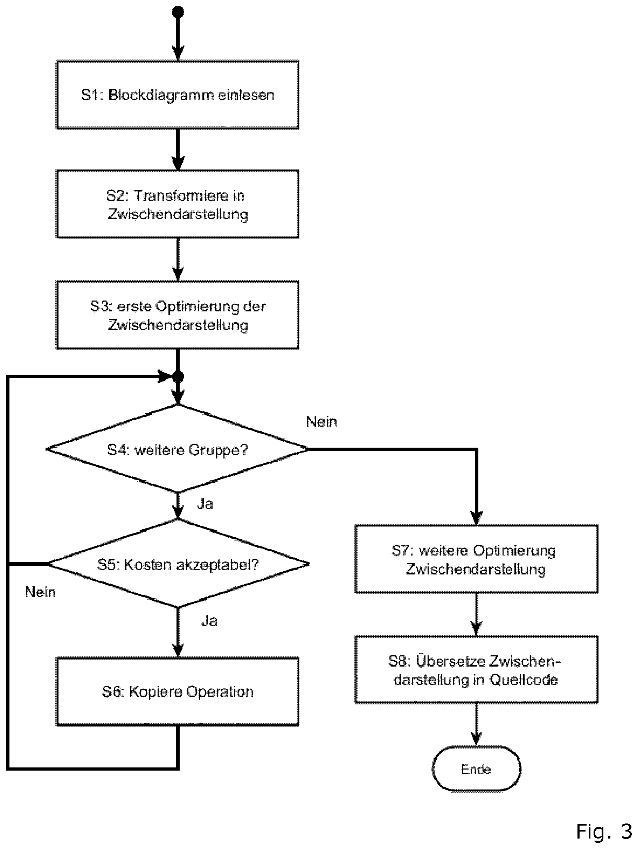

Figur 3 zeigt einen schematischen Ablaufplan einer Ausführungsform des erfindungsgemäßen Verfahrens zum Erzeugen von Quellcode. Das Verfahren kann vollständig von einem Prozessor einer beispielhaften Ausführung des Computersystems PC ausgeführt werden; es kann aber auch zur Ausführung in einer Client-Server-Umgebung mit einem Bedienrechner und einem oder mehreren über ein Netzwerk verbundenen Servern vorgesehen sein, wobei insbesondere rechenintensive Schritte auf den Servern durchgeführt werden.

In Schritt S1 (Blockdiagramm einlesen) wird ein Blockdiagramm eingelesen. Das Blockdiagramm umfasst mindestens zwei durch Signale verbundene Verarbeitungsblöcke und kann eine Vielzahl weiterer Blöcke enthalten. Zweckmäßigerweise umfasst das Einlesen des Blockdiagramms auch ein Auslesen mindestens einer Blockeigenschaft und/oder für die Codeerzeugung relevante Einstellungen, wie beispielsweise der Datentyp einer Variablen, aus der Definitionsdatensammlung DDT.

In Schritt S2 (Transformiere in Zwischendarstellung), wird das gewählte Modell aus einem oder mehreren Blöcken des Blockdiagramms in eine Zwischendarstellung transformiert, die vorzugsweise einen oder mehrere hierarchische Graphen umfasst. Hierbei kann es sich insbesondere um einen Datenflussgraph, einen Kontrollflussgraph oder eine Baumstruktur handeln. Neben dem Blockdiagramm werden zweckmäßigerweise auch Zusatzinformationen aus einer Definitionsdatensammlung DDT bei der Erzeugung der Zwischendarstellung berücksichtigt bzw. fließen in diese ein. Dies kann auch Situationen umfassen, in denen Elemente basierend auf Informationen in der Definitionsdatensammlung DDT erzeugt werden oder Eigenschaften von Elementen bzw. für die Codeerzeugung relevante Einstellungen, wie beispielsweise der Datentyp einer Variablen, aus der Definitionsdatensammlung DDT extrahiert werden.

In Schritt S3 (erste Optimierung der Zwischendarstellung) werden die hierarchischen Graphen der Zwischendarstellung optimiert, um die Anzahl benötigter Variablen und/oder einen Speicherverbrauch und/oder die Anzahl von Operationen bzw. Prozessorinstruktionen und/oder die Ausführungszeit des Quellcodes zu verringern. Diese Optimierung kann mehrere Zwischenschritte umfassen, in denen weitere Zwischendarstellungen zwischen Modell/Blockdiagramm und Quellcode/Programmtext erzeugt werden. Insbesondere kann es vorgesehen sein, in jedem Zwischenschritt eine Menge von ursprünglichen hierarchischen Graphen in eine andere Menge von geänderten hierarchischen Graphen zu konvertieren, wobei eine oder mehrere Optimierungsregeln angewandt werden. Verschiedene Strategien wie beispielweise "Constant folding" oder eine Eliminierung von "Dead Code" können während der ersten Optimierung der Zwischendarstellung angewandt werden.

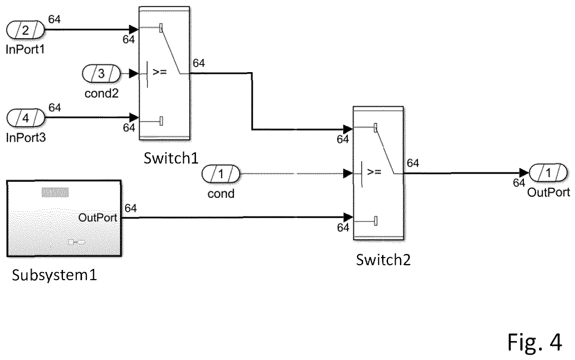

In Schritt S4 (weitere Gruppe?) wird überprüft, ob es weitere Gruppen von Operationen mit parallelen Kontrollflusszweigen gibt, bei denen eine Vervielfältigung und Verschiebung einer Operation in Frage kommt. Hierbei kann die Variable eine Eingangsvariable der Operation sein, und es kann eine Rückwärtspropagation erfolgen, wobei die Operation vervielfältigt und im Quellcode in den parallelen Kontrollflusszweigen vor der ursprünglichen Operation eingefügt wird. Alternativ kann die Variable eine Ausgangsvariable der Operation sein, wobei die Operation vervielfältigt und im Quellcode in mindestens einem von mehreren parallelen Kontrollflusszweigen eingefügt wird. In der Beschreibung von Figur 4 und den nachfolgenden Listings werden beispielhafte Gruppen von Operationen dargestellt und erläutert, für welche eine erfindungsgemäße Optimierung erfolgen kann.

Wenn es noch eine Gruppe von Operationen gibt, welche für die Optimierung geeignet ist, folgt Schritt S5; andernfalls wird die Ausführung in Schritt S7 fortgesetzt, um eine weitere Optimierung der Zwischendarstellung vorzunehmen.

In Schritt S5 (Kosten akzeptabel?) wird überprüft, ob die Vervielfältigung der Operation ein Kostenkriterium erfüllt. Das Kostenkriterium kann für Rückwärtspropagation und Vorwärtspropagation unterschiedlich sein. Allgemein muss hierbei zwischen den möglichen Vorteilen einer Vervielfältigung der Operation, nämlich eine mögliche Verkürzung der Laufzeit und ein geringerer Stack-Verbrauch, und dem möglichen Nachteil, nämlich einer Zunahme der Codegröße (was auch zu einer schlechteren Lesbarkeit führen kann), abgewogen werden.

Die Zunahme der Codegröße hängt von der Anzahl an parallelen Kontrollflusszweigen ab, welche auf die (gemeinsame) Variable zugreifen, und der Komplexität der Operation, wie beispielsweise die Anzahl von Teilberechnungen. Eine mögliche Verringerung der Laufzeit und eine Verringerung des Stack-Verbrauchs hängen ab von der Größe und Art der Variable. Für mehrkomponentige Variablen, wie insbesondere einen Vektor ist die Umkopieraktion aufwändiger, weil die einzelnen Elemente kopiert werden, insbesondere eine for-Schleife über die Dimension des Vektors durchlaufen werden muss. Im Fall einer Vorwärtspropagation hängt eine mögliche Verringerung der Laufzeit bzw. eine Verringerung des Stack-Verbrauchs auch davon ab, ob parallele Kontrollflusszweige existieren, die nicht auf die Variable zugreifen (so dass für diese Zweige die Operation überhaupt nicht mehr durchgeführt werden muss). Das Verschieben der Operation kann darüber hinaus nachfolgende Optimierungen der Zwischendarstellung ermöglichen, die zu einer weiteren Verringerung von Laufzeit und Stack-Verbrauch, aber auch zu einer Verringerung der Codegröße führen können. Selbst dann, wenn keine Folgeoptimierungen möglich wären, würde die Vervielfältigung der Operation wegen des verringerten Scopes der Zwischenvariablen immer noch zu einer Verringerung des Stack-Verbrauchs führen.

Prinzipiell kann mit zwei Gewichten W1 und W2 eine Berechnung der Form Codegrößenzunahme < W1 * Verringerung des Stack-Verbrauchs + W2 * Verringerung der Ausführungsdauer erfolgen. Wenn die Zielplattform bekannt ist, kann dabei eine detaillierte Betrachtung möglicher Verbesserungen hinsichtlich verringerter Laufzeit und geringerem Stack-Verbrauch und möglicher Mehrkosten in Form gestiegener Codegröße vorgenommen werden. Da eine genaue Vorhersage der Auswirkungen der Vervielfältigung der Operation aber aufwändig wäre, ist es zweckmäßig, eine Abschätzung anhand eines heuristischen Kostenkriteriums vorzunehmen.

Insbesondere können folgende Kostenkriterien für eine Abschätzung verwendet werden:
Wenn die Operation eine Schleife und vielleicht eine Akkumulator-Variable umfasst, ist die Vervielfältigung der Operation sinnvoll, wenn eine der folgenden Bedingungen erfüllt ist:
1. Mindestens ein Kontrollflusszweig der parallelen Kontrollflusszweige umfasst eine weitere Schleife, die mit der Schleife der (verschobenen) Operation zusammengefasst werden kann
2. Für eine Vorwärtspropagation gibt es mindestens einen Kontrollflusszweig, der nicht auf die Variable zugreift; alternativ kann auch vorgesehen sein, eine größere Anzahl von Kontrollflusszweigen zu fordern, die nicht auf die Variable zugreifen.
3. Die Variable ist eine mehrkomponentige Variable, und die Verschiebung der Schleife ermöglicht die Verwendung einer Ein- oder Ausgangsvariable mit kleinerer Dimension; hier kann eine Mindestabnahme der Dimension gefordert werden.

Wenn die Operation einen Funktionsaufruf umfasst, insbesondere nur aus dem Funktionsaufruf besteht, ist die Vervielfältigung der Operation sinnvoll, wenn eine der folgenden Bedingungen erfüllt ist:
1. In mindestens einem Kontrollflusszweig der parallelen Kontrollflusszweige kann die Zwischenvariable eliminiert bzw. auf diese verzichtet werden
2. Für eine Vorwärtspropagation gibt es mindestens einen Kontrollflusszweig, der nicht auf die Variable zugreift; alternativ kann auch vorgesehen sein, eine größere Anzahl von Kontrollflusszweigen zu fordern, die nicht auf die Variable zugreifen.

Ist das Kostenkriterium erfüllt, so dass die Kosten als akzeptabel eingeschätzt werden, dann folgt Schritt S6; andernfalls wird die Ausführung in Schritt S4 fortgesetzt, um auf das Vorhandensein weiterer optimierbarer Gruppen von Operationen zu prüfen.

Bei positiver Kosten-Nutzen-Abschätzung wird in Schritt S6 (Kopiere Operation) die Operation in die verschiedenen parallelen Kontrollflusszweige kopiert, um einen verringerten Stack-Verbrauch und potentiell weitere Optimierungen zu ermöglichen. Das Vervielfältigen der Operation umfasst ein Entfernen der Operation an der ursprünglichen Stelle, d.h. die Operation wird in die parallelen Kontrollflusszweige verschoben. Die Ausführung wird dann in Schritt S4 fortgesetzt, um weitere eventuell geeignete Gruppen von Operationen zu bearbeiten.

In Schritt S7 (weitere Optimierung Zwischendarstellung) werden die hierarchischen Graphen weiter optimiert, um die Anzahl benötigter Variablen und/oder einen Speicherverbrauch, wie beispielsweise eine Stackbelegung, und/oder die Anzahl von Operationen bzw. Prozessorinstruktionen und/oder die Ausführungszeit des Quellcodes zu verringern. Diese Optimierung kann eine Vielzahl von Zwischenschritten umfassen, in denen weitere Zwischendarstellungen zwischen Modell/Blockdiagramm und Quellcode/Programmtext erzeugt werden. Insbesondere kann es vorgesehen sein, in jedem Zwischenschritt eine Menge von ursprünglichen hierarchischen Graphen in eine andere Menge von geänderten hierarchischen Graphen zu konvertieren, wobei eine oder mehrere Optimierungsregeln angewandt werden. Während der weiteren Optimierung angewandt können verschiedene Optimierungsstrategien werden.

In Schritt S8 (Übersetze Zwischendarstellung in Quellcode) werden die optimierte Zwischendarstellung bzw. die optimierten hierarchischen Graphen, welche aus den gesamten durchgeführten Zwischenschritten resultieren, in Quellcode einer textuellen Programmiersprache, wie insbesondere C-Code, übersetzt. Auch in diesem Schritt kann eine weitere Optimierung erfolgen, insbesondere dergestalt, dass die erzeugten Anweisungen einer Untermenge der prinzipiell von der Sprache umfassten Anweisungen darstellen und/oder die erzeugten Kontrollstrukturen eine Untermenge der prinzipiell von der Sprache umfassten Kontrollstrukturen darstellen. Dies ermöglicht es, genau definierte Regeln zu erfüllen. Alternativ oder ergänzend kann es vorgesehen sein, Zusatzinformationen, wie z.B. einen Bezug zwischen Programmzeile und Block des Blockdiagramms, zu erzeugen und insbesondere in Form von Kommentaren in den Quellcode einzubinden, um die Lesbarkeit des Quellcodes zu verbessern und/oder ein Debugging zu vereinfachen.

Während oder nach der Codegenerierung können Informationen über das aktuelle Blockdiagramm oder Ergebnisse der Codegenerierung, wie beispielsweise Warnungen, in der Definitionsdatensammlung gespeichert werden. Diese Informationen können beispielsweise dazu genutzt werden, eine Kompilierung des erzeugten Quellcodes zu beeinflussen oder Metainformationen für andere Werkzeuge bereitzustellen, wie beispielsweise Kalibrierungsinformationen im ASAP2-Format oder Informationen zur Erzeugung einer Zwischenschicht nach dem AUTOSAR-Standard. In alternativen Ausführungsformen der Erfindung kann es vorgesehen sein, aus dem Blockdiagramm Code in einer Hardwarebeschreibungssprache oder eine Konfiguration eines programmierbaren Hardwarebausteins zu generieren.

Beispielhafte Ausführungsformen der Erfindung werden im Folgenden erläutert.

Figur 4 stellt ein Blockdiagramm mit parallelen Kontrollflusszweigen dar. Über einen ersten Eingangsport InPort1 wird ein mehrkomponentiges Eingangssignal empfangen und einem Umschaltblock Switch1 zugeführt; im dargestellten Beispiel handelt es sich bei dem mehrkomponentigen Eingangssignal um einen Vektor mit 64 Elementen. Über einen zweiten Eingangsport InPort3 wird ein weiteres mehrkomponentiges Eingangssignal, ein Vektor derselben Größe, empfangen und dem Umschaltblock Switch1 zugeführt. Über einen dritten Eingangsport cond2 wird ein skalares Eingangssignal empfangen und einem Auswahleingang des Umschaltblocks Switch1 zugeführt. Je nach dem am Auswahleingang anliegenden Wert leitet der Umschaltblock das eine oder das andere der beiden mehrkomponentigen Eingangssignale an einen zweiten Umschaltblock Switch2 weiter.

Das Blockdiagramm umfasst ferner einen hierarchischen Block bzw. ein Subsystem Subsystem1, welches ein weiteres mehrkomponentiges Signal ausgibt, vorliegend ein Vektorsignal mit 64 Elementen, welches ebenfalls dem zweiten Umschaltblock Switch2 zugeführt wird. Über einen vierten Eingangsport cond wird ein skalares Eingangssignal empfangen und einem Auswahleingang des zweiten Umschaltblocks Switch2 zugeführt. Je nach dem am Auswahleingang anliegenden Wert leitet der zweite Umschaltblock das Ausgangssignal des ersten Umschaltblocks oder das Ausgangssignal des hierarchischen Blocks Subsystem1 an einem Ausgangsport OutPort weiter. Insgesamt hängt das Ausgangssignal von OutPort damit von einem der parallelen Kontrollflusszweige im Blockdiagramm ab, wobei das gültige Signal erst anhand der zur Laufzeit an den Auswahleingängen anliegenden Signalwerte ermittelt werden kann. Handelt es sich bei dem Blockdiagram um ein Classic AUTOSAR Modell, so kann der Ausgangsport insbesondere eine explizite Sender-Receiver-Kommunikation bereitstellen. Diese wird im generierten Code durch einen RTE-Write-Funktionsaufruf implementiert.

Ohne Optimierung gemäß der vorliegenden Erfindung würde aus dem Blockdiagramm der in Listing 1 gezeigte Quellcode generiert.

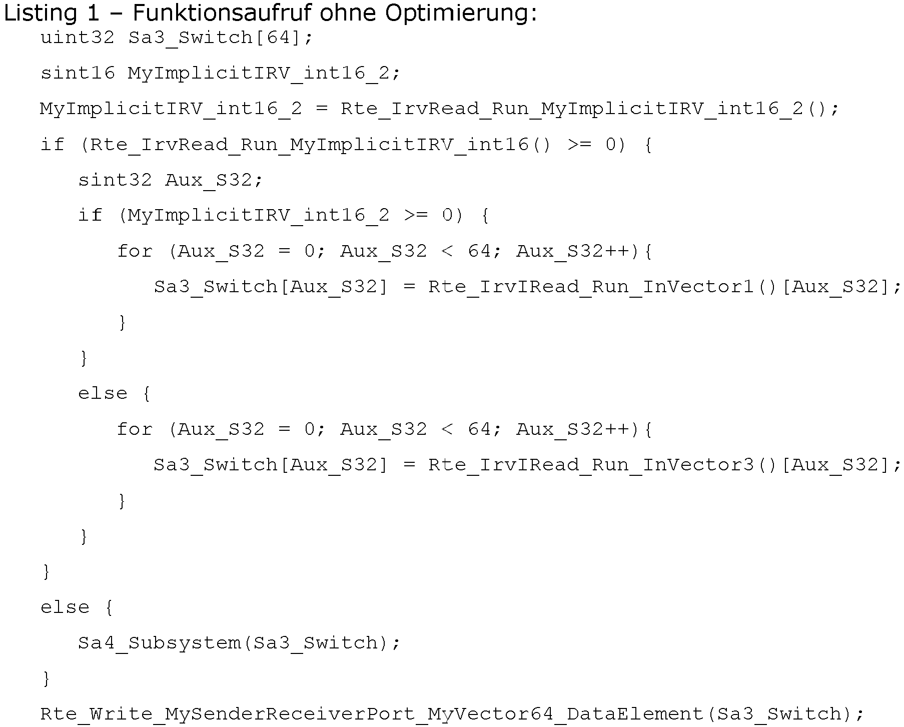

Für den Umschaltblock bzw. die Umschaltblöcke wird eine Blockausgangsvariable Sa3_Switch angelegt, die einen hohen Speicherbedarf auf dem Stack hat. Außerdem müssen je nach den an den Auswahleingängen anliegenden Signalen verschiedene Umkopieraktionen (in den for-Schleifen) durchgeführt werden, welche die benötigte Laufzeit des Programms verlängern.

In Listing 2 ist ein nach einem erfindungsgemäßen Verfahren optimierter Quellcode dargestellt. Hierbei wird eine Rückwärtspropagation vorgenommen, bei der die mehrkomponentige Variable eine Eingangsvariable der Operation, also des RTE-Funktionsaufrufs, ist und das Vervielfältigen der Operation ein Einfügen im Quellcode vor der ursprünglichen Operation umfasst, der Funktionsaufruf also in die parallelen Kontrollflusszweige vor dem ursprünglichen Funktionsaufruf vervielfältigt wird. Da die Operation in alle parallelen Kontrollflusszweige vervielfältigt wurde, bleibt sie an der ursprünglichen Stelle nicht bestehen, dass Vervielfältigen der Operation umfasst also ein Verschieben auf frühere Zeilen des Quellcodes.

Durch die Optimierung wird somit der RTE_Write-Aufruf vervielfacht, wodurch die Sa3_Switch-Variable nicht mehr benötigt wird und auf die Umkopieraktionen verzichtet werden kann. Nur in dem Kontrollflusszweig mit Subsystem1 wird eine Zwischenvariable benötigt, die gegenüber Listing1 aber einen engeren Scope aufweisen kann. Somit sinken in zwei der Kontrollflusszweige sowohl Stack-Verbrauch als auch benötigte Ausführungszeit.

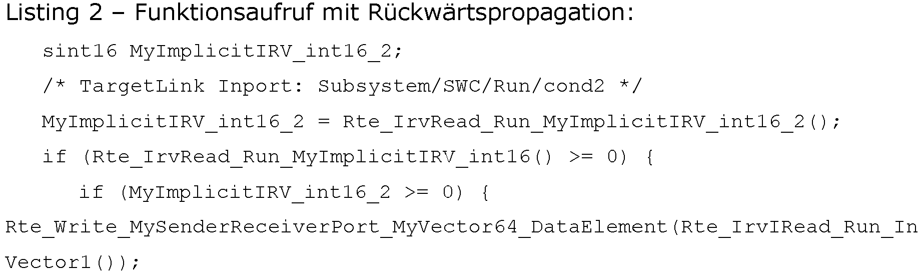

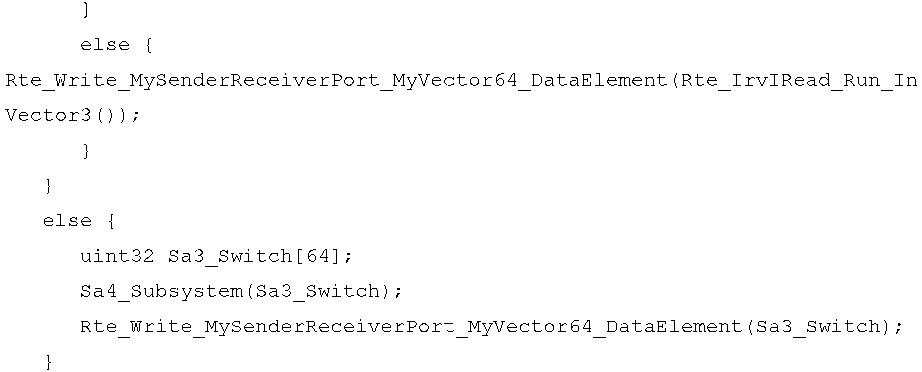

Weil die Vervielfältigung eines Funktionsaufrufs nur eine geringe Zunahme der Codegröße verursacht, kann zumindest für die Rückwärtspropagation eines Funktionsaufrufs auf eine genauere Kostenabschätzung verzichtet werden, wenn der Funktionsaufruf nur wenige Parameter (kleinere Anzahl als ein vorgegebener Schwellwert wie fünf) und keine weiteren Berechnungen umfasst. Wenn dies erfüllt ist, insbesondere im Fall einer Setter-Zugriffsfunktion, kann das Kostenkriterium bei der Rückwärtspropagation des Funktionsaufrufs als immer erfüllt angesehen werden.

Eine Rückwärtspropagation kann aber auch für andere Operationen sinnvoll sein, beispielsweise für eine Berechnung in einer Schleife. Hierbei ist es zweckmäßig, anhand einer C-Code-nahen Zwischendarstellung die Kostenabschätzung vorzunehmen. Aus diesem Grund wird im Folgenden nur der Quellcode ohne dazugehöriges Blockdiagramm gezeigt. Der in Listing 3 dargestellte Quellcode wurde aus einem Blockdiagramm generiert, in dem Vektorsignale einem Umschaltblock zugeführt werden, aus welchem eine Fallunterscheidung mittels "case"-Statement generiert wird. Die ausgegebenen Vektorsignale werden mittels eines Merge-Blocks zusammengefasst und die einzelnen Elemente aufsummiert. Im Quellcode wird dabei eine Schleife mit einer Akkumulator-Variable Aux_S16 generiert.

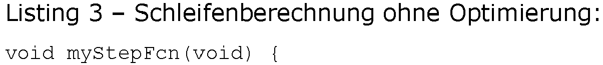

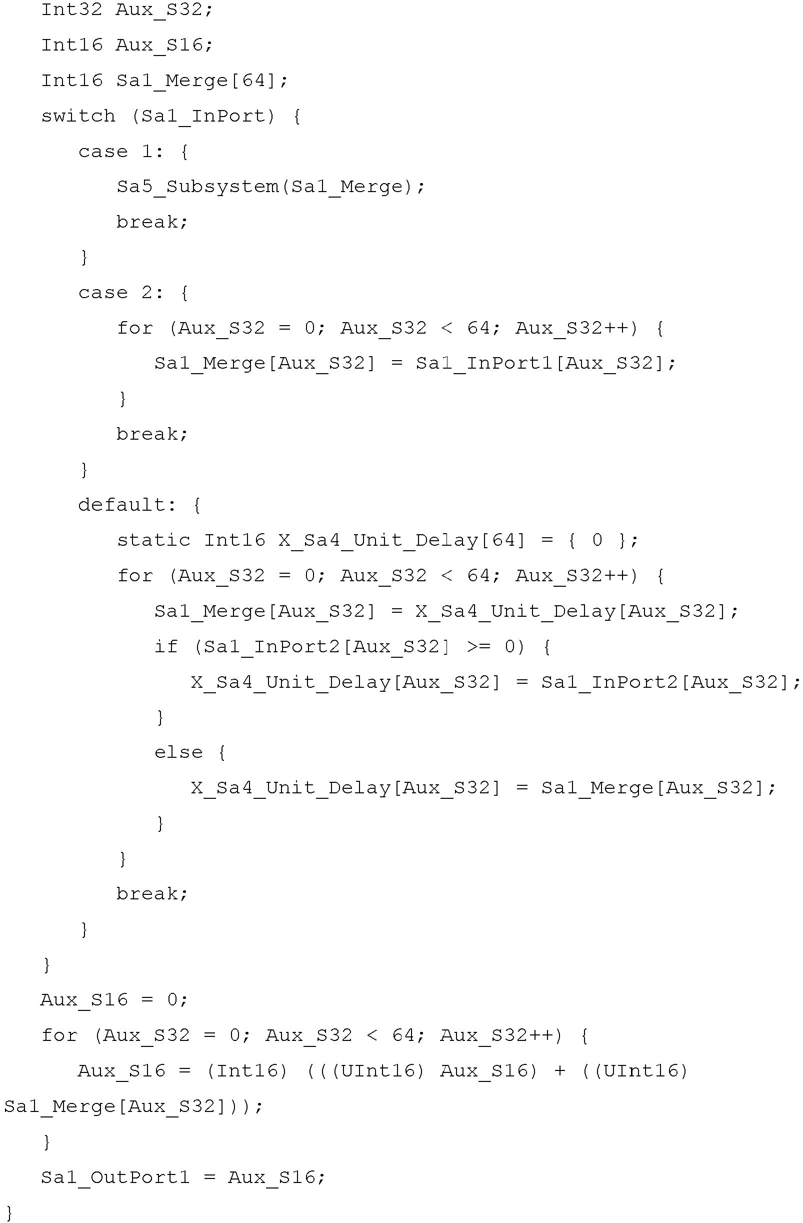

Die Schleife mit Akkumulator-Variable Aux_S16 umfasst einen Zugriff auf die einzelnen Elemente des Arrays Sa1_Merge, so dass dieses für den gesamten Scope der umfassenden Funktion vorhanden sein muss und wegen der 64 Elemente auch zu einem deutlichen Stack-Verbrauch führt. Indem die Schleife mit der Akkumulatorvariablen sowie die vorherige Initialisierung der Akkumulatorvariablen vervielfältigt wird, können in mehreren Kontrollflusszweigen Einsparungen erzielt werden, nämlich für Case 2 und den default-Case. Dies ist in Listing 4 dargestellt.

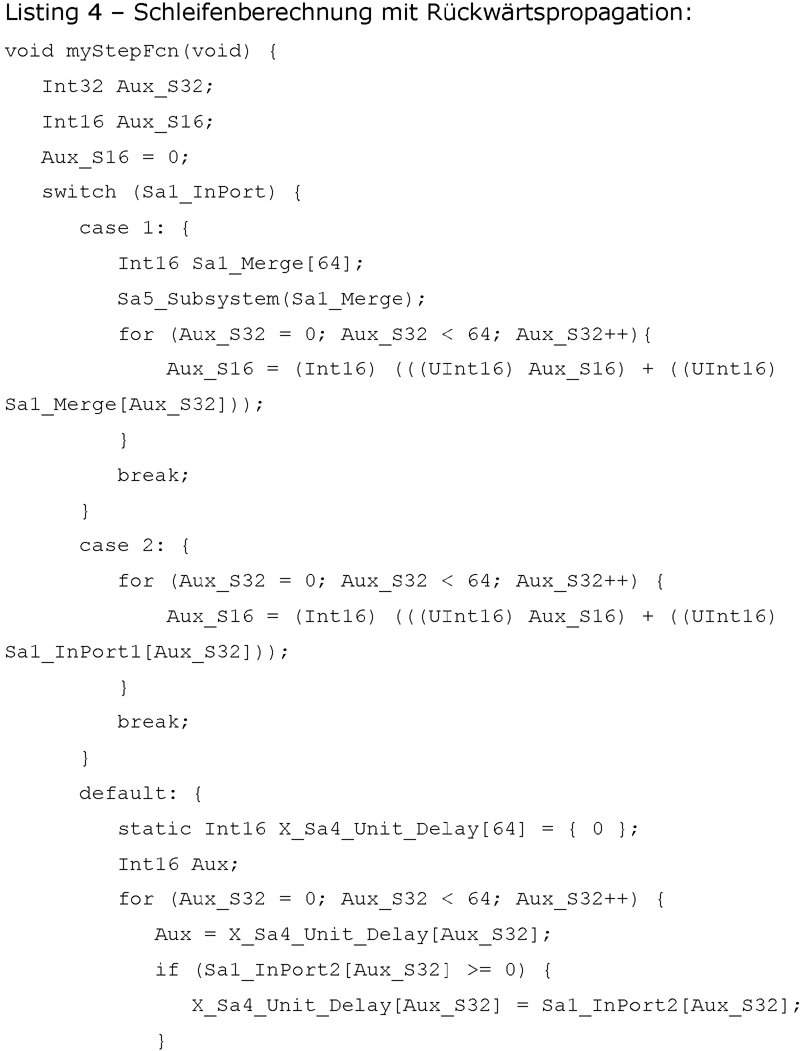

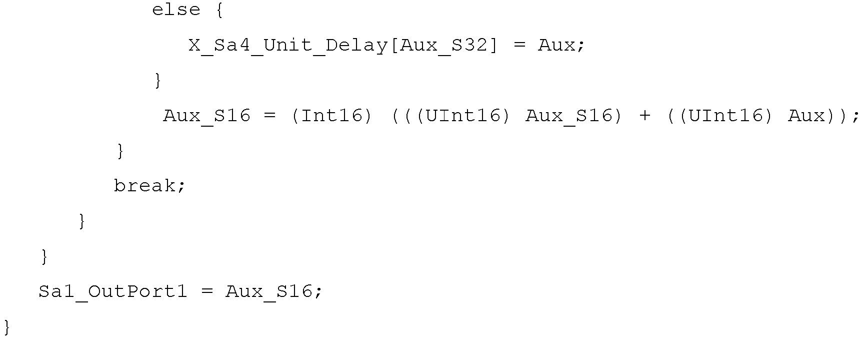

Die Array-Variable Sa1_Merge ist nur noch für den Kontrollflusszweig Case 1 erforderlich, und kann somit einen reduzierten Scope mit entsprechend verringerten Stack-Verbrauch erhalten. Im Kontrollflusszweig Case 2 kann vollständig auf die Array-Variable verzichtet werden. In dem default-Case-Kontrollflusszweig kann die Array-Variable durch eine skalare Hilfsvariable ersetzt werden, da alle Zugriffe innerhalb derselben Schleife erfolgen und in jeder Iteration jeweils nur auf ein Element zugegriffen wird. Insgesamt sind daher für zwei Kontrollflusszweige sowohl Laufzeit als auch Stack-Verbrauch reduziert.

Wenn mehrere parallele Kontrollflusszweige eine Variable empfangen, wobei die Variable eine Ausgangsvariable einer Operation ist, kann eine Vervielfältigung der Operation auch zu einem verringerten Stack-Verbrauch führen. Man kann das auch als Vorwärtspropagation bezeichnen, wobei das Vervielfältigen der Operation ein Einfügen im Quellcode nach der ursprünglichen Operation umfasst. Die Operation wird also in alle parallelen Kontrollflusszweige verschoben, welche die Variable empfangen. Wenn ein oder mehrere der parallelen Kontrollflusszweige unabhängig von der Variablen sind und diese somit nicht als Eingangsgröße verwenden, kann in diesen Kontrollflusszweigen auch auf ein Beschreiben der Variablen verzichtet werden, d.h. die Operation und die Variable können in den unabhängigen Kontrollflusszweigen komplett entfallen. Die Verringerung von Stack-Verbrauch und Ausführungszeit erfolgt in diesen Kontrollflusszweigen ohne Zunahme der Codegröße.

In Listing 5 ist ein Codebeispiel dargestellt, welches für eine Optimierung mittels Vorwärtspropagation geeignet ist; dieses Codebeispiel wurde aus einem Blockdiagramm generiert, welches eine Switch Case Block und daran angeschlossene Action Subsysteme umfasst. Grundsätzlich können auch andere Modellierungen wie ein Umschaltblock mit mehreren Eingängen durch Vorwärtspropagation optimiert werden. In dem dargestellten Codebeispiel haben die verschiedenen Kontrollflusszweige bzw. Cases teilweise unterschiedliche Eingangsvariablen. Der erste Case hat eine Bus-Eingangsvariable bzw. eine Struktur, welche aus einem Funktionsaufruf stammt. Der zweite Case hat eine skalares Eingangsvariable, welche eine vorher berechneten Summe über die Elemente eines Vektors enthält. Der Default-Case empfängt beide Eingangsvariablen.

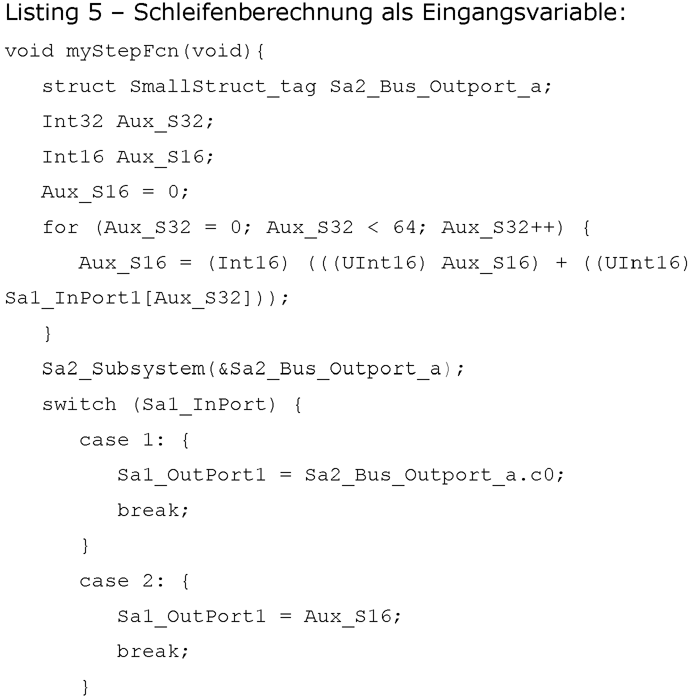

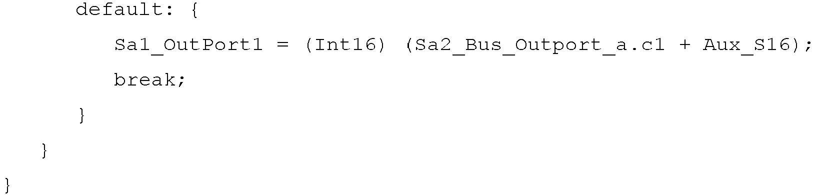

In Listing 6 ist das Codebeispiel nach Optimierung mittels Vorwärtspropagation dargestellt.

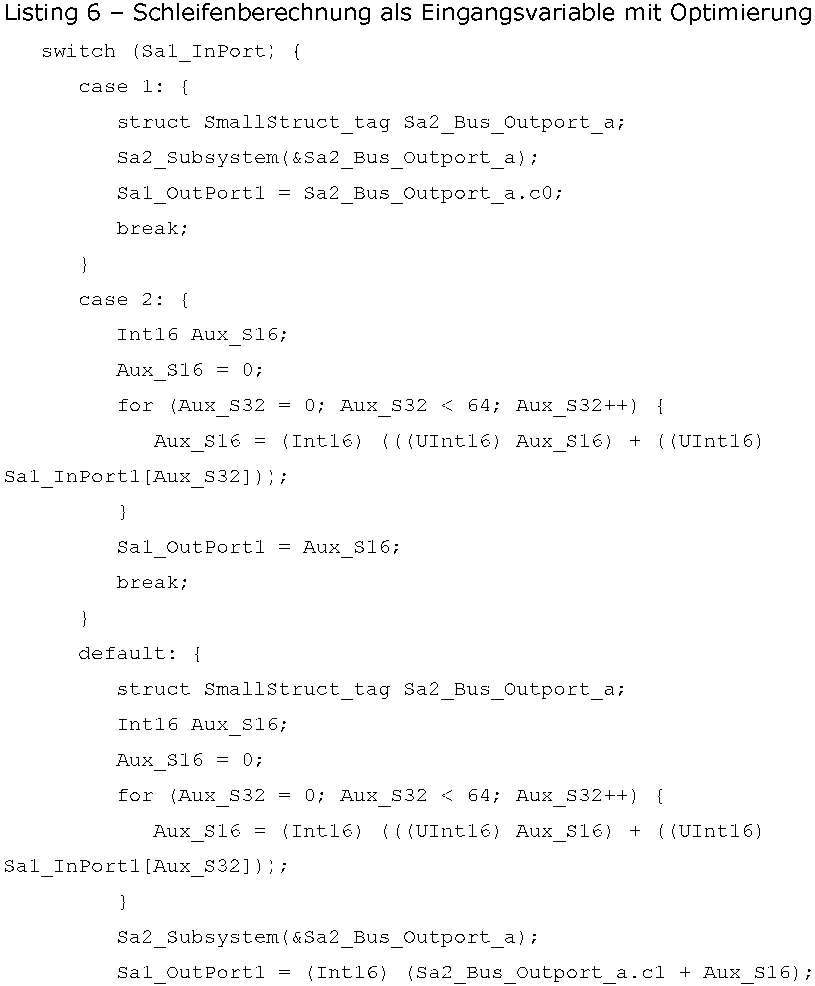

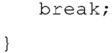

Die Operation einer Schleife mit Berechnung der Summe über die einzelnen Vektorelemente wurde vervielfältigt und in die Kontrollflusszweige von Case 2 und Default-Case verschoben. In Case 1 können die Schleife und die Hilfsvariable für die Summe komplett entfallen, da in diesem Kontrollflusszweig das Ergebnis nicht verwendet wird. Für den Default-Case gibt es keine Einsparungen, da beide Variablen in Berechnungen verwendet werden.

Indem Operationen vervielfältigt und verschoben werden, sind Einsparungen im Stack-Verbrauch und möglicherweise auch der Ausführungszeit möglich. Dadurch, dass ein Kostenkriterium überprüft wird, kann eine Abwägung gegenüber einer gestiegenen Codegröße erfolgen. Besonders in Verbindung mit nachfolgenden Optimierungen kann es zu deutlichen Verbesserungen in Speicherverbrauch und Ausführungsgeschwindigkeit kommen.

## Patentansprüche

1. Verfahren zum Erzeugen von Quellcode aus einem oder mehreren Blöcken eines Blockdiagramms, welches mindestens zwei Blöcke und mindestens eine Signalverbindung zwischen den Blöcken umfasst, wobei das Erzeugen von Quellcode ein Transformieren (S2) des Blockdiagramms in eine Zwischendarstellung, ein sukzessives Optimieren (S3, S7) der Zwischendarstellung und ein Übersetzen (S8) der optimierten Zwischendarstellung in Quellcode umfasst, wobei das Transformieren (S2) eines Blocks das Erstellen eines Bezugs auf eine Blockausgangsvariable umfasst, mit den Schritten
• Erkennen (S4) von mindestens zwei parallelen Kontrollflusszweigen, die eine Variable lesen oder schreiben,
• Identifizieren einer Operation, die auf die Variable zugreift,
• Überprüfen (S5), ob ein Kostenkriterium erfüllt ist, und
• Vervielfältigen (S6) der Operation in den mindestens zwei parallelen Kontrollflusszweigen, wenn das Kostenkriterium erfüllt ist, wobei das Vervielfältigen (S6) der Operation ein Verschieben der Operation von der ursprünglichen Stelle an die Stellen umfasst, wo die Variable gelesen oder geschrieben wird.

2. Verfahren zum Erzeugen von Quellcode nach Anspruch 1, wobei eine Rückwärtspropagation und/oder eine Vorwärtspropagation vorgenommen wird, wobei bei einer Rückwärtspropagation die Variable eine Eingangsvariable der Operation ist und das Vervielfältigen (S6) der Operation ein Verschieben im Quellcode vor die ursprüngliche Stelle umfasst, wobei bei einer Vorwärtspropagation die Variable eine Ausgangsvariable der Operation ist und das Vervielfältigen (S6) der Operation ein Verschieben im Quellcode hinter die ursprüngliche Stelle umfasst.

3. Verfahren zum Erzeugen von Quellcode nach Anspruch 2, wobei das Kostenkriterium ohne weitere Prüfung erfüllt ist, wenn die Operation ein Funktionsaufruf mit weniger Parametern als ein vorgegebener Schwellenwert ist und zusätzlich eine der folgenden Bedingungen erfüllt ist:
• im Fall einer Vorwärtspropagation ist mindestens ein Kontrollflusszweig unabhängig von der Variablen und/oder die Variable ist eine mehrkomponentige Variable
• im Fall einer Rückwärtspropagation ist die Variable eine mehrkomponentige Variable.

4. Verfahren zum Erzeugen von Quellcode nach einem der vorhergehenden Ansprüche, wobei das Kostenkriterium die Zunahme der Codegröße und eine Verringerung des Stack-Verbrauchs und/oder eine mögliche Verringerung der Laufzeit berücksichtigt.

5. Verfahren nach Anspruch 4, wobei die Zunahme der Codegröße basierend auf der Anzahl von parallelen Kontrollflusszweigen, welche auf die Variable zugreifen, und/oder eines Maßes für die Komplexität der Operation ermittelt wird.

6. Verfahren nach Anspruch 4 oder 5, wobei die Verringerung des Stack-Verbrauchs und/oder eine mögliche Verringerung der Laufzeit basierend auf der Anzahl von parallelen Kontrollflusszweigen, welche nicht auf die Variable zugreifen, und des Speicherbedarfs und/oder einer Dimension der Variable ermittelt wird.

7. Verfahren zum Erzeugen von Quellcode nach einem der vorhergehenden Ansprüche, wobei die Operation einen Funktionsaufruf und/oder eine Berechnung über Elemente einer mehrkomponentigen Variablen umfasst.

8. Verfahren zum Erzeugen von Quellcode nach einem der vorhergehenden Ansprüche, mit dem nachfolgenden Schritt Anwenden mindestens einer weiteren Optimierung (S7) auf die Zwischendarstellung.

9. Verfahren zum Erzeugen von Quellcode nach Anspruch 8, wobei das Kostenkriterium eine Abschätzung der von der mindestens einen weiteren Optimierung verursachten Änderungen an Laufzeit, Stack-Verbrauch und/oder Codegröße umfasst.

10. Verfahren zum Konfigurieren eines Steuergeräts (ES), wobei das Steuergerät (ES) mindestens eine Recheneinheit (MCR) umfasst und vorzugsweise mindestens einen Sensor und/oder mindestens einen Aktor aufweist, um Daten eines physikalischen Prozesses zu erfassen und/oder auf diesen einzuwirken, das Verfahren umfassend die Schritte
a. Einlesen eines Blockdiagramms,
b. Erzeugen eines Quellcodes mit einem Verfahren nach einem der vorhergehenden Ansprüche,
c. Kompilieren des Quellcodes für die Recheneinheit (MCR), so dass ein ausführbarer Code erzeugt wird,
d. Übertragen des ausführbaren Codes auf das Steuergerät (ES), und
e. Hinterlegen des ausführbaren Codes auf einem nichtflüchtigen Speicher (NVM) des Steuergeräts (ES) und/oder Ausführen des ausführbaren Codes durch die Recheneinheit (MCR) des Steuergeräts (ES).

11. Computerprogrammprodukt mit einem computerlesbaren Speichermedium, auf dem Befehle eingebettet sind, die, wenn sie von einem Prozessor ausgeführt werden, bewirken, dass der Prozessor dazu eingerichtet ist, ein Verfahren gemäß einem der vorhergehenden Ansprüche auszuführen.

12. Computersystem (PC) umfassend eine Mensch-Maschine-Schnittstelle (DIS, KEY, MOU), einen nichtflüchtigen Speicher (HDD) und einen Prozessor (CPU), wobei der Prozessor (CPU) dazu eingerichtet ist, ein Verfahren nach einem der Ansprüche 1 bis 10 auszuführen.

## Claims

1. A method for generating source code from one or more blocks of a block diagram comprising at least two blocks and at least one signal connection between the blocks, wherein the generation of source code comprises transforming (S2) the block diagram into an intermediate representation, successively optimizing (S3, S7) the intermediate representation and translating (S8) the optimized intermediate representation into source code, wherein the transforming (S2) of a block comprises creating a reference to a block output variable, comprising the steps of
- recognizing (S4) at least two parallel control flow branches that read or write a variable,
- Identifying an operation that accesses the variable,
- checking (S5) whether a cost criterion is fulfilled, and
- duplicating (S6) the operation in the at least two parallel control flow branches if the cost criterion is met, wherein duplicating (S6) the operation comprises moving the operation from the original location to the locations where the variable is read or written.

2. Method for generating source code according to claim 1, wherein a backward propagation and/or a forward propagation is performed, wherein in a backward propagation the variable is an input variable of the operation and the duplication (S6) of the operation comprises a shifting in the source code before the original location, wherein in a forward propagation the variable is an output variable of the operation and the duplication (S6) of the operation comprises a shifting in the source code after the original location.

3. Method for generating source code according to claim 2, wherein the cost criterion is met without further examination if the operation is a function call with fewer parameters than a predetermined threshold value and additionally one of the following conditions is met:
- in the case of forward propagation, at least one control flow branch is independent of the variable and/or the variable is a multi-component variable
- in the case of backward propagation, the variable is a multi-component variable.

4. Method for generating source code according to one of the preceding claims, wherein the cost criterion takes into account the increase in code size and a reduction in stack consumption and/or a possible reduction in runtime.

5. Method according to claim 4, wherein the increase in code size is determined based on the number of parallel control flow branches accessing the variable and/or a measure of the complexity of the operation.

6. Method according to claim 4 or 5, wherein the reduction in stack consumption and/or a possible reduction in runtime is determined based on the number of parallel control flow branches not accessing the variable and the memory requirement and/or a dimension of the variable.

7. Method for generating source code according to any of the preceding claims, wherein the operation comprises a function call and/or a calculation over elements of a multi-component variable.

8. Method for generating source code according to any one of the preceding claims, comprising the subsequent step of applying at least one further optimization (S7) to the intermediate representation.

9. Method of generating source code according to claim 8, wherein the cost criterion comprises an estimation of the changes in runtime, stack consumption and/or code size caused by the at least one further optimization.

10. Method for configuring a control device (ES), wherein the control device (ES) comprises at least one computing unit (MCR) and preferably has at least one sensor and/or at least one actuator for acquiring data of and/or acting on a physical process, the method comprising the steps of
a. Reading in a block diagram,
b. Generating a source code with a method according to one of the preceding claims,
c. Compiling the source code for the computing unit (MCR) so that an executable code is generated,
d. Transferring the executable code to the control unit (ES), and
e. Storing the executable code on a non-volatile memory (NVM) of the control unit (ES) and/or executing the executable code by the computing unit (MCR) of the control unit (ES).

11. Computer program product comprising a computer readable storage medium having embedded thereon instructions which, when executed by a processor, cause the processor to be adapted to execute a method according to any one of the preceding claims.

12. Computer system (PC) comprising a man-machine interface (DIS, KEY, MOU), a non-volatile memory (HDD) and a processor (CPU), wherein the processor (CPU) is adapted to execute a method according to any one of claims 1 to 10.

## Revendications

1. Procédé de génération de code source à partir d'un ou plusieurs blocs d'un diagramme de blocs comprenant au moins deux blocs et au moins une connexion de signal entre les blocs, la génération de code source comprenant une transformation (S2) du diagramme de blocs en une représentation intermédiaire, une optimisation successive (S3, S7) de la représentation intermédiaire et une traduction (S8) de la représentation intermédiaire optimisée en code source, la transformation (S2) d'un bloc comprenant la création d'une référence à une variable de sortie de bloc, comprenant les étapes de
- Identifier (S4) au moins deux branches de flux de contrôle parallèles qui lisent ou écrivent une variable,
- Identifier une opération qui accède à la variable,
- vérifier (S5) si un critère de coût est satisfait, et
- dupliquer (S6) l'opération dans les au moins deux branches de flux de contrôle parallèles si le critère de coût est satisfait, la duplication (S6) de l'opération comprenant un déplacement de l'opération de l'emplacement d'origine vers les emplacements où la variable est lue ou écrite.

2. Procédé de génération de code source selon la revendication 1, dans lequel on procède à une propagation arrière et/ou à une propagation avant, dans lequel, dans le cas d'une propagation arrière, la variable est une variable d'entrée de l'opération et la duplication (S6) de l'opération comprend un déplacement dans le code source avant l'emplacement d'origine, dans lequel, dans le cas d'une propagation avant, la variable est une variable de sortie de l'opération et la duplication (S6) de l'opération comprend un déplacement dans le code source après l'emplacement d'origine.

3. Procédé de génération de code source selon la revendication 2, dans lequel le critère de coût est satisfait sans autre vérification si l'opération est un appel de fonction avec moins de paramètres qu'une valeur seuil prédéterminée et si, en outre, l'une des conditions suivantes est remplie :
- dans le cas d'une propagation vers l'avant, au moins une branche de flux de contrôle est indépendante de la variable et/ou la variable est une variable à plusieurs composantes
- dans le cas d'une propagation vers l'arrière, la variable est une variable à plusieurs composantes.

4. Procédé de génération de code source selon l'une quelconque des revendications précédentes, dans lequel le critère de coût prend en compte l'augmentation de la taille du code et une réduction de la consommation de la pile et/ou une éventuelle réduction du temps d'exécution.

5. Procédé selon la revendication 4, dans lequel l'augmentation de la taille du code est déterminée sur la base du nombre de branches de flux de contrôle parallèles qui accèdent à la variable et/ou d'une mesure de la complexité de l'opération.

6. Procédé selon la revendication 4 ou 5, dans lequel la réduction de la consommation de la pile et/ou une éventuelle réduction du temps d'exécution sont déterminées en function du nombre de branches de flux de contrôle parallèles qui n'accèdent pas à la variable et de l'utilisation de la mémoire et/ou d'une dimension de la variable.

7. Procédé de génération de code source selon l'une quelconque des revendications précédentes, dans lequel l'opération comprend un appel de fonction et/ou un calcul sur des éléments d'une variable à plusieurs composantes.

8. Procédé de génération de code source selon l'une quelconque des revendications précédentes, comprenant l'étape suivante consistant à appliquer au moins une optimisation supplémentaire (S7) à la représentation intermédiaire.

9. Procédé de génération de code source selon la revendication 8, dans lequel le critère de coût comprend une estimation des modifications du temps d'exécution, de la consommation de la pile et/ou de la taille du code provoquées par ladite au moins une optimisation supplémentaire.

10. Procédé de configuration d'un dispositif de commande (ES), le dispositif de commande (ES) comprenant au moins une unité de calcul (MCR) et présentant de préférence au moins un capteur et/ou au moins un actionneur pour acquérir des données d'un processus physique et/ou agir sur celui-ci, le procédé comprenant les étapes suivantes
a. Lecture d'un schéma fonctionnel,
b. Génération d'un code source par un procédé selon l'une des revendications précédentes,
c. Compilation du code source pour l'unité de calcul (MCR) de manière à générer un code exécutable,
d. Transmettre le code exécutable à l'unité de commande (ES), et
e. Stockage du code exécutable dans une mémoire non volatile (NVM) du dispositif de commande (ES) et/ou exécution du code exécutable par l'unité de calcul (MCR) du dispositif de commande (ES).

11. Produit programme d'ordinateur comprenant un support de stockage lisible par ordinateur sur lequel sont intégrées des instructions qui, lorsqu'elles sont exécutées par un processeur, font que le processeur est adapté pour exécuter un procédé selon l'une quelconque des revendications précédentes.

12. Système informatique (PC) comprenant une interface homme-machine (DIS, KEY, MOU), une mémoire non volatile (HDD) et un processeur (CPU), dans lequel le processeur (CPU) est adapté pour exécuter un procédé selon l'une quelconque des revendications 1 à 10.
